Europäisches Patentamt

European Patent Office

Office européen des brevets

(19)

(11) Numéro de publication: **0 043 324**
**B1**

(12) **FASCICULE DE BREVET EUROPEEN**

(45) Date de publication du fascicule du brevet: **12.09.84**

(51) Int. Cl.³: **A 23 N 12/00,** A 23 N 12/08

(21) Numéro de dépôt: **81401038.5**

(22) Date de dépôt: **26.06.81**

(54) Machine pour peler et torréfier et nettoyer les graines de sésame.

(30) Priorité: **27.06.80 LB 4948**

(43) Date de publication de la demande:
**06.01.82 Bulletin 82/01**

(45) Mention de la délivrance du brevet:
**12.09.84 Bulletin 84/37**

(84) Etats contractants désignés:
**AT BE CH DE FR GB IT LI LU NL SE**

(56) Documents cités:
**DE-A-2 226 347**
**DE-C- 49 518**
**FR-A-1 286 996**
**FR-A-2 434 580**
**GB-A- 7 954**
**US-A-1 524 387**

(73) Titulaire: **Ghandour, Issam Abdul-Kader**
**Quartier Noueiri**
**Beyrouth (LB)**

(72) Inventeur: **Ghandour, Issam Abdul-Kader**
**Quartier Noueiri**
**Beyrouth (LB)**

(74) Mandataire: **Bressand, Georges et al**
**c/o CABINET LAVOIX 2 Place d'Estienne d'Orves**
**F-75441 Paris Cedex 09 (FR)**

Courier Press, Leamington Spa, England.

## Description

La présente invention est relative à une machine pour le traitement et la torréfaction des graines de sésame.

Les graines de sésame entrent pour une part très important dans l'alimentation, notamment dans les pays du Proche-Orient dans lesquels elles sont utilisées d'une part pour l'extraction de l'huile et d'autre part pour la fabrication de deux produits de grande consommation, savoir le TAHINA qui est utilisé en cuisine, comme sauce ou assaisonnement, et le HALVA dont la consommation est également importante. En outre, l'utilisation des graines de sésame tend à se répandre de façon croissante en EUROPE où elle atteint déjà plus de 1000 tonnes par an pour différentes utilisations également dans le domaine de l'alimentation.

Dans toutes ses utilisations, les graines de sésame doivent être torréfiées et débarassées de leur enveloppe. Le traitement des graines de sésame est effectué jusqu'à présent suivant un procédé manuel et leur torréfaction est effectuée dans des conditions telles que le rendement de ces opérations est tout à fait insuffisant, face à la demande croissante.

Suivant la pratique traditionnelle, on fait tout d'abord tremper les graines de sésame dans de l'eau, à froid pendant une durée d'environ 30 minutes, on décortique ensuite les graines par agitation et rotation dans des bassins, par exemple en ciment, cette opération nécessitant environ 10 minutes par lots de 25 Kgs de graines, on sépare la balle de la graine par trempage à l'eau froide salée (à 18° Baumé) dans laquelle le grain flotte et la balle descend, le grain étant retiré manuellement.

On lave ensuite les graines à l'eau froide puis on les torréfie au four, la torréfaction de lots de 500 Kgs de graines nécessitant l'utilisation pendant 2 à 3 heures d'une batterie de huit fours chauffés à la vapeur.

La totalité des opérations nécessite de 10 à 15 m³ d'eau pour le traitement de 500 Kgs de graines et dure environ 6 heures 30 tandis que la surface nécessaire pour la totalité de l'installation représente environ 400 M².

Il n'existe donc pas de technique antérieure en ce qui concerne une machine pour le traitement des graines de sésame, et l'invention a pour but de combler cette lacune en réalisant une machine pour le traitement et la torréfaction des graines de sésame, qui permette de traiter des quantités importantes en un temps considérablement plus court qu'avec les procédés traditionnels et avec un encombrement également considérablement inférieur à celui des installations classiques de cuves et de fours, avec une production importante et fournissant un produit de haute qualité.

Bien que pouvant présenter sous certains aspects quelque analogie avec la torréfaction des graines de café, les machines classiques existantes se sont révélées inutilisables pour le traitement des graines de sésame.

On connait notamment une machine décrite dans la demande allemande publiée n° 2.226.347 qui comprend un tambour rotatif d'axe horizontal dans lequel tournent des organes d'agitation des graines à travers lesquels est soufflé de l'air chaud, ces organes servant en même temps d'électrodes pour engendrer de l'énergie à haute fréquence.

Une autre machine, décrite au brevet français n° 1.286.996, comprend une enceinte, alimentée en graines par une trémie à sa partie supérieure, dont le fond est chauffé directement par une rampe de brûleurs et comportant des organes d'agitation tournant autour d'un axe horizontal. Une conduite d'aspiration permet d'évacuer les déchets.

En raison de leur conception et de leur aménagement, aucune de ces deux machines ne peut assurer les conditions particulières qui sont absolument indispensables pour le traitement et la torréfaction des graines de sésame.

Il convient en effet de souligner que la torréfaction des graines de sésame est une opération extrêmement délicate en raison du fait que la couleur (et donc le degré de torréfaction), et la qualité des graines traitées présentent une importance considérable pour la fabrication du TAHINA et du HALVA, car une torréfaction trop poussée ne permettrait pas d'obtenir un produit fini ayant la couleur et le goût indispensables pour la fabrication de ces produits.

L'invention a en conséquence pour objet une machine pour le traitement et la torréfaction des graines de sésame, du type dans lequel des graines sont torréfiées au moyen d'air chaud distribué dans la masse des graines par des organes tubulaires d'agitation rotatifs après passage de cet air dans ces organes d'agitation et dans l'axe, tubulaire également, de rotation de ces organes, caractérisée en ce qu'elle comprend un premier et un second étages superposés séparés par une paroi horizontale pleine, pourvue d'une ouverture centrale, le premier étage ou étage inférieur comprenant en combinaison des moyens d'alimentation en air et des moyens de chauffage et de répartition de cet air dans ledit premier étage, chauffant notamment la paroi horizontale pleines, lesdits organes d'agitation rotatifs étant montés dans ledit second étage autour d'un axe vertical de façon à distribuer l'air chaud provenant du premier étage au sein de la masse des graines disposée sur ladite paroi et étant constitués par au moins deux râcles tubulaires creuses s'étendant radialement de part et d'autre dudit axe vertical rotatif, qui comporte à son extrémité inférieure une partie tubulaire creuse fermée à son extrémité supérieure et dont l'extrémité inférieure ouverte est montée rotative dans l'ouverture centrale de ladite cloison séparant l'étage inférieur de l'étage supérieur, ledit second étage comportant dans sa partie supérieure des moyens pour amener les graines et des moyens pour évacuer la balle séparée des graines.

D'autres caractéristiques et avantages de l'invention apparaîtront au cours de la description qui va suivre faite en se référant aux dessins annexés données uniquement à titre d'exemple et dans lesquels:

— la Fig. 1 est une vue d'ensemble montrant la forme générale de la machine suivant l'invention;
— la Fig. 2 est une vue en coupe verticale suivant la ligne 2—2 de la Fig. 1;
— la Fig. 3 en est une vue en coupe horizontale suivant la ligne 3—3 de la Fig. 2;
— la Fig. 4 est une vue partielle en perspective avec arrachement de la partie rotative et montrant l'agencement des râcles d'agitation et des moyens de distribution de l'air chaud.

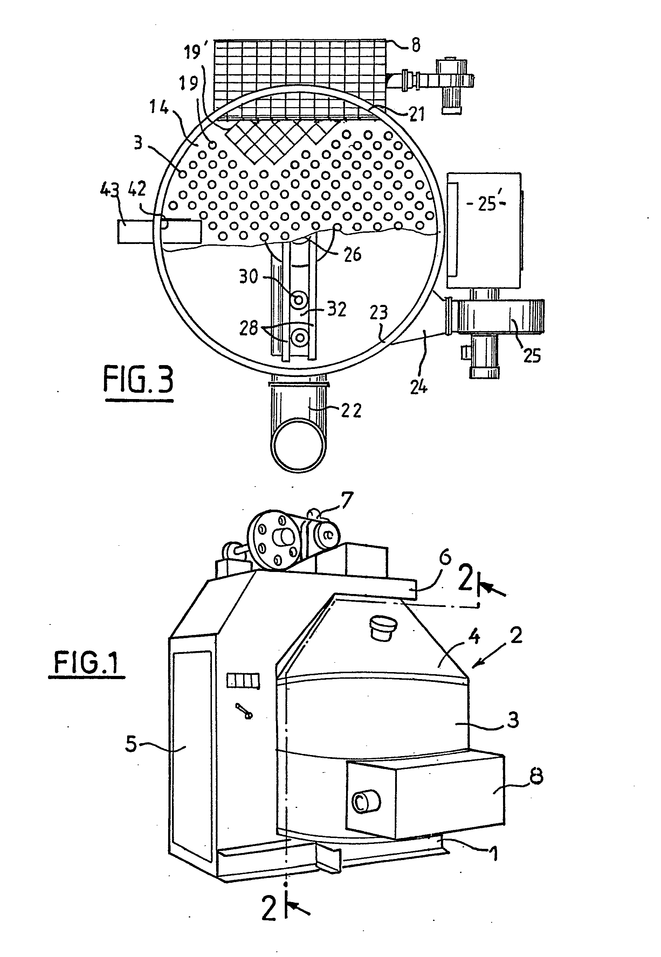

La Fig. 1 est une vue d'ensemble de la machine suivant l'invention qui comprend un socle (1) sur lequel est posée la machine roprement dite désignée dans son ensemble par la référence (2) et qui comprend un corps ayant une partie inférieure (3) de forme cylindrique et une partie supérieure (4) de forme tronconique.

Un montant vertical (5) disposé latéralement contient les organes de commande de la machine et comporte une partie supérieure horizontale (6) s'étendant au dessus du sommet de la partie tronconique (4) et portant un ensemble moteur (7) dans un but qui sera décrit dans la suite.

Un dispositif à brûleurs (8) est fixé latéralement au bas de la partie inférieure cylindrique (3) dans un but qui sera également décrit dans la suite.

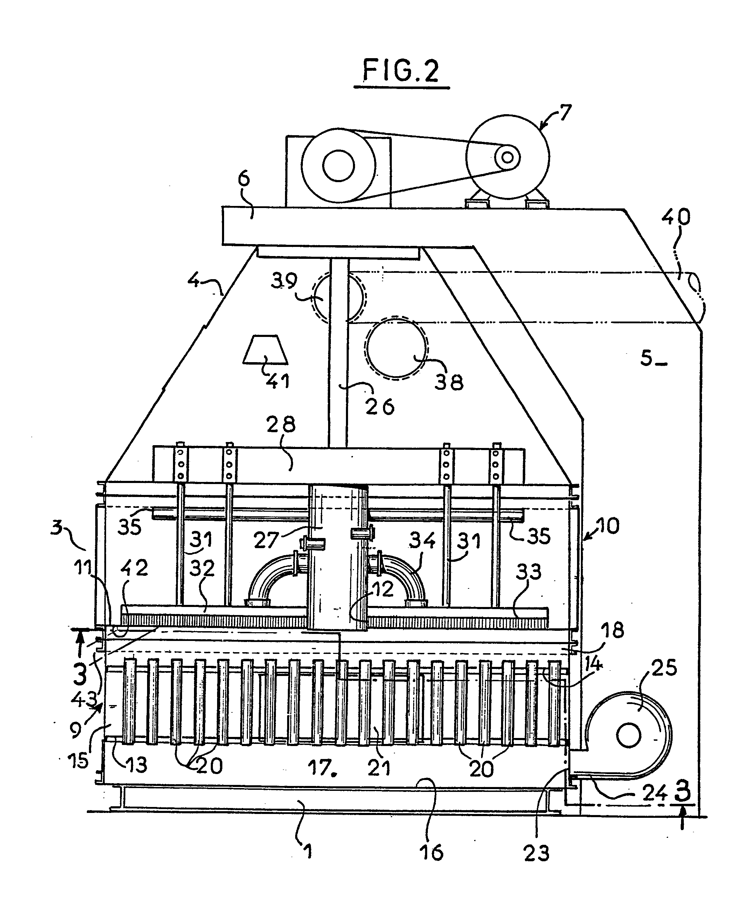

La Fig. 2 est une vue en coupe à plus grande échelle de la machine représentée à la Fig. 1 et on voit que la partie inférieure (3) est constituée par une enveloppe cylindrique en tôle qui comporte deux étages, un étage inférieur (9) et un étage supérieur (10) séparés par une paroi horizontale (11) en tôle comportant une ouverture centrale (12) dans un but qui sera décrit dans la suite.

L'étage inférieur (9) est lui-même divisé en trois compartiments au moyen de deux cloisons horizontales parallèles (13, 14) espacées verticalement.

Les cloisons (13, 14) délimitent entre elles un compartiment intermédiaire fermé (15), la cloison inférieure (13) délimitant avec un fond (16) de la machine un compartiment inférieur (17), tandis que la cloison supérieure (14) délimite avec la paroi (11) un compartiment supérieur (18).

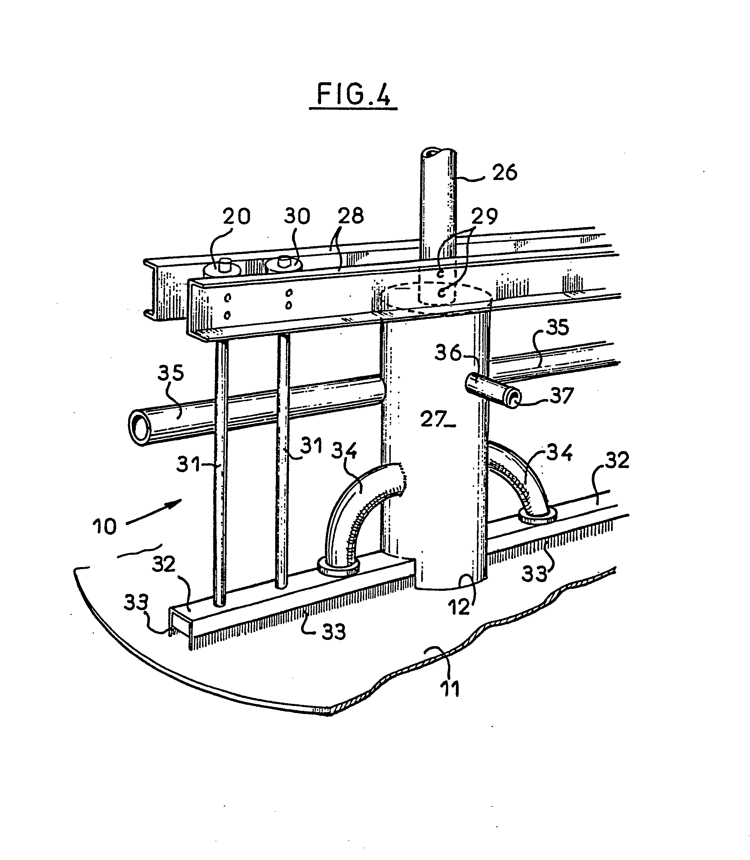

Les cloisons (13, 14) sont percées de trous (19) qui peuvent être de forme circulaire, comme représenté à la Fig. 3, ou encore de forme carrée, comme représenté en (19′) à la Fig. 3, et des tubes parallèles verticaux espacés (20) sont disposés dans les trous des cloisons (13, 14) afin de faire communiquer entre eux les compartiments (17, 18) en s'étendant à joint étanche à travers le compartiment (15).

La paroi extérieure de l'étage inférieur (9) est percée d'une ouverture (21) (Fig. 2) dans laquelle est monté l'ensemble (8) à brûleurs, de façon que les flammes des brûleurs soient dirigées à l'intérieur du compartiment (15) afin de chauffer les tubes (20).

L'ensemble (8) à brûleurs étant de construction classique ne fait pas partie de l'invention et ne sera donc pas décrit de façon détaillée.

La paroi de l'étage inférieur (9) est percée d'une seconde ouverture diamétralement opposée à l'ouverture (21) et à laquelle est reliée une conduite (22) (Fig. 3) d'évacuation des gaz brûlés émis par l'ensemble (8).

Le compartiment inférieur (17) comporte dans sa paroi une ouverture (23) située à peu près à 90° par rapport à l'ouverture (21) et à la conduite de sortie (22) et dans laquelle est ajustée la sortie (24) d'une turbine soufflante (25) entrainée par un ensemble-moteur (25′) fixé latéralement sur la paroi de l'étage inférieur (9).

On comprend que l'air soufflé dans le compartiment inférieur (17) par la turbine (25) traverse les tubes verticaux (20) chauffés par le brûleur et dans lesquels il s'échauffe pour parvenir dans le compartiment supérieur (18) et chauffer ainsi la paroi (11) qui constitue le fond de l'étage supérieur (10), l'air chaud s'échappant du compartiment (18) par l'ouverture centrale (12) pour passer dans l'étage supérieur (10) comme on va le décrire.

Comme on l'a indiqué, l'étage supérieur (10) de la machine présente une forme cylindrique et est surmonté par une partie supérieure (4) de forme tronconique fermée à sa partie supérieure. Cet ensemble est traversé par un arbre vertical central (26) qui tourillonne dans un roulement (non représenté) porté par la partie horizontale (6) du montant (5) sur laquelle est monté l'ensemble moteur-réducteur (7) adapté pour entraîner l'arbre (26) en rotation. L'arbre (26) comporte à son extrêmité ou section inférieure une partie tubulaire creuse (27) coaxiale de diamètre plus grand, à peu près égal à celui de l'ouverture (12), dont l'extrêmité supérieure est fermée et dont l'extrêmité inférieure ouverte est montée rotative de façon à peu près étanche dans l'ouverture (12) de la cloison (11).

A la jonction de la section supérieure l'arbre (26) et de sa section inférieure (27) sont fixées deux traverses parallèles (28) qui peuvent avantageusement être constituées par deux fers un U disposés dos à dos de part et d'autre de l'axe (26) sur lequel ils sont fixés comme représenté en (29) ces traverses étant fixées entre elles au voisinage de leurs extrêmités par des entretoises (30) sur lesquelles sont fixées des tiges verticales (31) s'étendant vers le bas et dont les extrêmités inférieures sont fixées sur des bras tubulaires creux (32) s'étendant de part et d'autre de la partie tubulaire (27), parallèlement aux traverses (28), et fixées par une extrêmité à la partie inférieure de celle-ci de façon à être entrainés en rotation conjointement avec elle.

L'ensemble constitué par les traverses (28), les tiges (31) et les bras (32) est ainsi solidaire de l'arbre (26) et de sa section (27) et est ainsi entraîné en rotation par l'ensemble moteur-réducteur (7).

Les bras creux (32) présentent avantageusement une forme rectangulaire en section et sont fermés à leur extrêmité opposée à l'arbre (26, 27) et sont disposés légèrement espacés au-dessus de la paroi (11).

Chaque bras (32) porte sur ses côtés opposés une brosse constituée par une rangée de poils verticaux (33) qui s'étendent vers le bas, en contact avec la surface de la paroi (11), formant ainsi des râcles qui tournent en contact avec la paroi (11) pour en balayer la surface dans un mouvement circulaire.

L'espace intérieur de chaque bras (32) est relié à l'espace intérieur de la section tubulaire (27) par une conduite (34) de telle sorte que l'air chaud provenant du compartiment supérieur (18) de l'étage inférieur et remplissant la section (27) s'échappe de celle-ci pour passer dans les bras (32) et s'échapper de ceux-ci par des trous prévus le long de leur paroi inférieure, entre les rangées de poils (33), qui sont avantageusement en acier.

Il est également prévu sur la section (27) deux conduites (35) s'étendant en sens opposé et fixées sur la section (27) au voisinage des traverses (28), les conduites (35) communiquant avec l'intérieur de la section (27) et débouchant librement dans l'étage supérieur (10), leur section étant légèrement inférieure à celle des conduites (34) alimentant les bras (32).

La section (27) comporte enfin au moins une ouverture supplémentaire (36) dont l'extrêmité est fermée par un obturateur réglable (37) dans un but qui sera décrit dans la suite.

La partie supérieure tronconique (4) comporte une première ouverture (38) d'alimentation qui est avantageusement de forme circuliare et dans laquelle est disposée l'extrêmité d'un dispositif d'alimentation tubulaire (non représenté) contenant une vis sans fin reliée à une trémie et permettant d'introduire les graines de sésame à la partie supérieure de la machine, ces graines tombant sur le fond (11) de l'étage supérieur (10). Un tel dispositif d'alimentation étant classique, et ne faisant par partie de l'invention ne sera donc pas décrit en détail. Il suffit d'indiquer que ce dispositif peut être actionné mécaniquement par des moyens connus pour déverser à l'intérieur de la machine suivant l'invention des lots de graines préalablement lavées par quantités déterminées successives.

La partie supérieure (4) comporte une seconde ouverture désignée par la référence (39) de laquelle s'étend une conduite tubulaire (40) de forte section qui est reliée à une turbine aspirante (non représentée) destinée à l'évacuation de la balle séparée des graines après traitement.

Il est enfin prévu une ouverture d'aération fermée par un volet (41) dont la fonction sera décrite dans la suite, et une trappe d'accès permettant d'accéder à l'ensemble rotatif à l'intérieur de la machine pour les besoins d'entretien et de réparations.

Pour évacuer les graines traitées, il est prévu dans la paroi (11) constituant le fond de l'étage supérieur (10) une ouverture (42) pouvant être fermée par une plaque coulissante et débouchant dans une goulotte (43) inclinée vers le bas (Fig. 2 et 3).

Le fonctionnement de la machine est le suivant. Un lot de graines de sésame à traiter, d'environ 500 Kgs est introduite à la partie supérieure de la machine par le dispositif d'alimentation par l'ouverture (38). On actionne simultanément l'ensemble moteur-réducteur (7) entraînant les râcles en rotation, le brûleur (8), la turbine (25) et le dispositif d'aspiration (40). Les graines tombent sur le fond (11) sur lequel elles sont réparties par la rotation des râcles (32) qui leur imprime une agitation constante du fait que la couche de graines a une hauteur qui est supérieure à celle des râcles (32). Le brûleur (8) chauffe les tubes (20) et la soufflante (25) envoie un courant d'air sous pression dans le compartiment (17), cet air traversant les tubes (20) dans lesquels il est chauffé à haute température et pénètre dans le compartiment (18) d'où il sort par l'ouverture (12) et est dirigé d'une part par les conduites (34) à l'intérieur des bras (32) et d'autre par les conduites (35) dans le volume intérieur de la partie supérieure de la machine. La section des conduites (35) étant en peu inférieure à celle des conduites (34), l'air chaud tend principalement à sortir à travers les ouvertures (non représentées) à la partie inférieure des bras (32) entre les rangées de poils (33) et cet air à haute température chauffe les graines de sésame qui reposent elles-mêmes sur la paroi (11) chauffée également par l'air chaud du compartiment (18). En outre, le surplus d'air chaud s'écoulant par les conduites (35) chauffe la surface supérieure de la couche de graines dans l'étage (10). Les graines sont ainsi portées sous agitation à une température suffisante pour provoquer leur torréfaction et la séparation de la balle. La balle est alors aspirée par la turbine (40) et évacuée de la machine tandis que l'ouverture plus ou moins grande du volet (41) permet à l'air ambiant de pénétrer dans la machine en provoquant des tourbillons qui favorisent l'élimination de la balle de la masse des graines traitées. En outre, le réglage du volet (41) permet en cours de traitement des graines de commander la température. Lorsque le degré de torréfaction désiré a été atteint, on arrête le fonctionnement du brûleur et l'air propulsé par la turbine (25) refroidit les graines tout en maintenant l'étage supérieur (10) de la machine sous un courant d'air continu.

Lorsque les graines sont torréfiées et refroidies, la totalité de la balle a été évacuée et les graines sont évacuées par l'ouverture de la plaque fermant la goulotte d'évacuation (43), les râcles constitués par les bras (32) avec leurs poils (33) amenant progressivement la totalité des graines vers la périphérie de la machine au-dessus de l'ouverture (42).

Les essais effectués au moyen de la machine suivant l'invention ont montré que le temps total nécessaire pour le traitement de 500 Kgs de graines était de 2 heures à 2 heures 30. En outre, l'eau nécessaire pour laver 500 Kgs de graines, en éliminer les cailloux et les faire gonfler est d'environ 2 m³, ce qui représente une économie considérable par rapport aux quantités d'eau nécessaires pour le traitement d'une quantité équivalente de graines au moyen du procédé traditionnel.

On remarquera en outre que la balle évacuée de la machine par la conduite (40) est déversée dans un réceptacle séparé (non représenté) dans lequel elle est récupérée par exemple pour l'alimentation du bétail, tandis que lorsque les graines sont traitées par le procédé traditionnel, la balle n'est pas récupérable.

Les essais ont également montré qu'après le traitement du premier lot ayant nécessité 2 heures 30, le second lot nécessitait un temps inférieur d'environ 10 minutes en raison du fait que l'ensemble de la machine est déjà monté en température et nécessite donc un temps de chauffage moindre. Le traitement du troisième lot de graines nécessite un temps encore légèrement inférieur et le temps nécessaire se stabilise ensuite autour de 2 heures, ces temps étant bien entendu fonction de la température ambiante extérieure à la machine.

Les différentes fonctions peuvent être commandées par un opérateur, mais il est bien évident que différents dispositifs de commandes automatiques, notamment électroniques peuvent également être utilisés pour commander la vitesse de rotation de l'ensemble de râcles portatives, la température des graines, la température de l'air chauffé, etc, ces dispositifs étant tous connus et ne faisant pas partie de l'invention.

Il ressort de ce qui précède que la machine suivant l'invention, qui est la première machine permettant le traitement en continu des graines de sésame permet de réaliser une économie extrêmement importante par rapport au procédé traditionnel et d'obtenir un rendement également bien supérieur rendu nécessaire par l'augmentation de la consommation tout en assurant au produit traité une qualité constante.

**Revendications**

1. Machine pour le traitement et la torréfaction des graines de sésame, du type dans lequel des graines sont torréfiées au moyen d'air chaud distribué dans la masse des graines par des organes tubulaires (32, 33) d'agitation rotatifs après passage de cet air dans ces organes d'agitation et dans l'axe de rotation (26, 27), également tubulaire, de ces organes, caractérisée en ce qu'elle comprend un premier et un second étages superposés (9, 10) séparés par une paroi horizontale pleine (11), pourvue d'une ouverture centrale (12), le premier étage (9) ou étage inférieur comprenant en combinaison des moyens (25) d'alimentation en air et des moyens (8, 20) de chauffage et de répartition de cet air dans ledit premier étage, chauffant notamment la paroi horizontale pleine (11), lesdits organes d'agitation rotatifs (27, 34, 32) étant montés dans ledit second étage (10) autour d'un axe vertical (26) de façon à distribuer l'air chaud provenant du premier étage (9) au sein de la masse des graines disposée sur ladite paroi (11) et étant constitués par au moins deux râcles tubulaires creuses (32, 33) s'étendant radialement de part et d'autre dudit axe vertical rotatif, (26) sur la section inférieure de cet axe (26), laquelle est conformée en une partie tubulaire creuse (27) fermée à son extrémité supérieure et dont l'extrémité inférieure ouverte est montée rotative dans l'ouverture centrale (12) de ladite cloison (11) séparant l'étage inférieur (9) de l'étage supérieur (10), ledit second étage comportant dans sa partie supérieure des moyens (38) pour amener les graines et des moyens (39, 40) pour évacuer la balle séparée des graines.

2. Machine suivant la revendication 1, caractérisée en ce que lesdites râcles tubulaires creuses (32, 33), sont fixées par une extrémité à ladite section tubulaire inférieure (27) de l'axe et sont reliées à l'intérieur de celle-ci par des conduites (34) de façon à recevoir de l'air chaud provenant du premier étage (9).

3. Machine suivant la revendication 2, caractérisée en ce que lesdites râcles (32) ont une surface inférieure percée d'orifices de sortie pour l'air chaud et espacées de ladite paroi (11) et elles comportent chacune au moins une rangée longitudinale de poils verticaux (33) ou analogues, par exemple en fil d'acier, adaptés pour balayer la surface de ladite paroi (11).

4. Machine suivant la revendication 1, caractérisée en ce que ledit axe vertical (26) porte un bâti de support (28, 31) auquel sont suspendues lesdites râcles, ce bâti de support étant fixé au voisinage de la jonction de la section supérieure de l'axe (26) avec ladite section inférieure (27), qui est de diamètre plus grand que la section supérieure.

5. Machine suivant la revendication 2, caractérisée en ce qu'elle comprend une conduite supplémentaire (35) de distribution d'air chaud dans ledit second étage (10), s'étendant radialement à partir de ladite section inférieure (27) de diamètre plus grand, à une certaine distance au-dessus des râcles (32, 33), et en ce qu'au moins une ouverture supplémentaire réglable (36) de sortie d'air chaud est prévue dans la paroi de ladite section inférieure (27) tubulaire de l'axe (26).

6. Machine suivant l'une quelconque des revendications précédentes, caractérisée en ce que le second étage (10) comporte à sa partie supérieure (4) de forme tronconique au moins une ouverture d'aération réglable (41).

7. Machine suivant la revendication 6, caractérisée en ce que lesdits moyens d'alimentation (38) en graines sont constitués par une ouverture dans laquelle s'étend une vis sans fin montée rotative dans un tube relié à une trémie d'alimentation.

8. Machine suivant la revendication 6, caractérisée en ce que lesdites moyens d'évacuation de la balle comprennent en combinaison une conduite (4) débouchant dans ladite partie supérieure (4) du second étage (10) et reliée à une turbine d'aspiration à l'extérieur de la machine, et une ouverture réglable (41) espacée de la bouche de ladite conduite (40) pour provoquer des tourbillons dans ledit second étage.

9. Machine suivant l'une quelconque des revendications précédentes, caractérisée en ce que ledit premier étage (9) est divisé horizontalement par deux cloisons parallèles (13, 14) délimitant un compartiment supérieur (18) fermé à sa partie supérieure par la paroi horizontale pleine (11) et communiquant avec ladite section inférieure (27) de l'axe vertical par l'ouverture centrale (12) de ladite paroi (11), un compartiment inférieur (17) et un compartiment intermédiaire (15) fermé, à travers lequel s'étendent des tubes verticaux (20) traversant lesdites cloisons (13, 14) et reliant entre eux les compartiments inférieur et supérieur (17, 18).

10. Machine suivant la revendication 9, caractérisée en ce qu'elle comprend une soufflante (25) entraînée par un moteur et adaptée pour débiter de l'air extérieur dans ledit compartiment inférieur (17).

11. Machine suivant la revendication 9, caractérisée en ce qu'un brûleur (8) est adapté pour projeter des flammes dans ledit compartiment intermédiaire (15) pour chauffer lesdits tubes (20) et une ouverture des sortie (22) des gaz brûlés est prévue en un point dudit compartiment (15) opposé au brûleur (8).

12. Machine suivant la revendication 1, caractérisée en ce que ledit arbre vertical (26, 27) portant les râcles (32, 33) est entraîné en rotation au moyen d'un ensemble (7) comprenant un moteur et un réducteur, monté par exemple à la partie supérieure de la machine.

**Patentansprüche**

1. Vorrichtung zur Behandlung und zum Rösten von Sesamkörnern, wobei die Körner mittels in der Körnermasse verteilter Heißluft geröstet werden, wobei die Heißluft in der Körnermasse mittels rohrförmiger Bauteile (32, 33) für rotierendes Umrühren verteilt wird, nachdem die Luft durch die Organe zum Umrühren und durch den ebenfalls rohrförmigen Rotationsschaft (26, 27) für diese Bauteile geleitet ist, dadurch gekennzeichnet, daß sie eine erste und eine darüber angeordnete zweite Etage (9, 10) aufweist, die durch einen horizontalen ebenen Boden (11) getrennt sind, der eine zentrale Öffnung (12) aufweist, wobei die erste oder untere Etage (9) in Kombination die Eingabevorrichtungen (25) für Luft und Mittel (8, 20) zum Erhitzen und zur Verteilung dieser Luft in der ersten Etage bei gleichzeitigem Erhitzen des waagrechten Bodens (11) aufweist, wobei die Bauteile für rotierendes Umrühren (27, 34, 32) in der zweiten Etage (10) um einen vertikalen Schaft (26) derart angeordnet sind, daß die Heißluft aus der ersten Etage (9) in der Kornmasse auf dem Boden (11) verteilt wird, und die aus mindestens zwei rohrförmigen hohlen Rakeln (32, 33) besteht, die sich radial von dem Rotationsschaft (26) im unteren Bereich des Schaftes (26) erstreckken, wobei letzterer in Form eines Hohlrohres (27) ausgebildet ist, das an seinem oberen Ende geschlossen ist und dessen unteres Ende offen und drehbar in der zentralen Öffnung (12) des Bodens (11) angeordnet ist, der die untere Etage (9) von der darüberliegenden Etage (10) trennt, wobei die zweite Etage in ihrem oberen Bereich Vorrichtungen (38) zur Zuführung der Körner und Vorrichtungen (39, 40) zum Abziehen der von den Körnern abgetrennten Spelzen aufweist.

2. Vorrichtung nach Anspruch 1, dadurch gekennzeichnet, daß die rohrförmigem hohlen Rakeln (32, 33) mit ihren einem Ende mit dem unterenrohrförmigen Bereich (27) des Schaftes und im Inneren mit Leitungen (34) zur Leitung der Heißluft aus der ersten Etage (9) verbunden sind.

3. Vorrichtung nach Anspruch 2, dadurch gekennzeichnet, daß die Rakeln (32) eine untere Oberfläche aufweisen, die für den Austritt der Heißluft mit Löchern versehen ist, und die von dem Boden (11) im Abstand angeordnet sind, wobei jede Rakel mindestens eine Längsreihe von senkrecht stehenden Borsten (33) oder ähnliches, beispielsweise aus Stahldraht, aufweisen, die zum Bestreichen des Bodens (11) ausgebildet sind.

4. Vorrichtung nach Anspruch 1, dadurch gekennzeichnet, daß der vertikale Schaft (26) einen Trägerrahmen (28, 31) trägt, an dem die Rakeln angeordnet sind, wobei der Trägerrahmen in Nachbarschaft des Übergangs des oberen Bereichs des Schaftes (26) in den unteren Bereich (27) fixiert ist, wobei letzterer Bereich einen größeren Durchmesser als der obere Bereich aufweist.

5. Vorrichtung nach Anspruch 2, dadurch gekennzeichnet, daß sie eine zusätzliche Leitung (35) zur Verteilung der Heißluft in der zweiten Etage (10) aufweist, die sich radial vom unteren Bereich (27) mit dem größeren Durchmesser eine gewisse Länge über die Rakeln (32, 33) erstreckt, sowie mindestens eine zusätzliche regelbare Öffnung (36) zum Austritt der Heißluft in der Wandung des unteren rohrförmigen Bereichs (27) des Schaftes (26).

6. Vorrichtung nach einem der vorhergehenden Ansprüche, dadurch gekennzeichnet, daß die zweite Etage (10) in ihrem oberen kegelstumpfartig ausgebildeten Bereich (4) mindestens eine regelbare Belüftungsöffnung (41) aufweist.

7. Vorrichtung nach Anspruch 6, dadurch gekennzeichnet, daß die Zugabevorrichtungen (38) für die Körner aus einer Öffnung bestehen, in der sich eine Förderschnecke erstreckt, die drehbar in einer Röhre angeordnet und mit einem Vorratsbunker verbunden ist.

8. Vorrichtung nach Anspruch 6, dadurch gekennzeichnet, daß die Vorrichtungen zum Abziehen der Spelzen aus einer Kombination einer Leitung (40), die in den oberen Bereich (4) der zweiten Etage (10) einmündet und mit einer Saugturbine außerhalb der Vorrichtung verbunden ist, mit einer regelbaren Öffnung (41), die von der Öffnung der Leitung (40) zur Erzeugung von Turbulenzen in der zweiten Etage im Abstand angeordnet ist, besteht.

9. Vorrichtung nach einem der vorhergehenden Ansprüche, dadurch gekennzeichnet, daß die erste Etage (9) horizontal durch zwei parallele Böden (13, 14) unterteilt ist, die eine obere Abteilung (18), die im obereb Teil durch den horizontalen Boden (11) verschlossen ist, und mit dem unteren Bereich (27) des vertikalen Schaftes durch die zentrale Öffnung (12) im Boden (11) verbunden ist, und eine untere Abteilung (17) und eine geschlossene zwischenliegende Abteilung (15) abtrennt, durch die sich vertikale Rohre (20) erstrecken, die durch die Böden (13, 14) hindurchtreten und durch die die untere und obere Abteilung (17, 18) verbunden sind.

10. Vorrichtung nach Anspruch 9, dadurch gekennzeichnet, daß sie ein Gebläse (25) aufweist, das durch einen Motor betrieben und zur Zuführung von Außenluft in die untere Abteilung (17) ausgebildet ist.

11. Vorrichtung nach Anspruch 9, dadurch gekennzeichnet, daß ein Brenner (8) derart ausgebildet ist, daß Flammen in die Zwischenabteilung (15) eindringen, um die Rohre (20) zu erhitzen, und daß eine Austrittsöffnung (22) für verbranntes Gas an einer Stelle in der Abteilung (15) gegenüber dem Brenner (8) vorgesehen ist.

12. Vorrichtung nach Anspruch 1, dadurch gekennzeichnet, daß der vertikale Schaft (26, 27), der die Rakeln (32, 33) trägt, mit einer Vorrichtung (7) in Rotation versetzt wird, die einen Motor und ein Untersetzungsgetriebe aufweist, die beispielsweise im oberen Bereich der Vorrichtung angeordnet sind.

## Claims

1. A machine for treating and torrefying sesame seeds, of the type in which seeds are torrefied by means of hot air distributed within the mass of the seeds by rotary stirring tubular elements (32, 33) after passage of this air in these stirring elements in the rotating shaft (26, 27), which is also tubular, of these elements; characterised in that it comprises superimposed first and second levels (9, 10) separated by a solid horizontal wall (11) provided with a central opening (12), the first or lower level (9) comprising in combination air supply means (25) and means (8, 20) for heating and distributing this air in said first level, in particular heating the solid horizontal wall (11), said rotary stirring elements (27, 34, 32) being mounted in said second level (10) about a vertical shaft (26) so as to distribute the hot air coming from the first level (9) within the mass of the seeds disposed on said wall (11) and being constituted by at least two hollow tubular scrapers (32, 33) which extend radially on each side of said rotary vertical shaft (26) on a lower section of this shaft (26) which has the shape of a hollow tubular part (27) closed at its upper end and whose lower open end is rotatively mounted in the central opening (12) of said wall (11) separating the lower level (9) from the upper level (10), said second level including in its upper part means (38) for supplying the seeds and means (39, 40) for discharging the husk separated from the seeds.

2. A machine according to claim 1, characterised in that said hollow tubular scrapers (32, 33) are fixed by one end to said lower tubular section (27) of the shaft and are connected to the inside of this lower section by conduits (34) so as to receive hot air coming from the first level (9).

3. A machine according to claim 2, characterised in that said scrapers (32) have a lower surface provided with hot air outlet orifices and spaced from said wall (11), and each comprise at least one longitudinal row of vertical bristles (33) or the like, for example of steel wire, adapted to sweep the surface of said wall (11).

4. A machine according to claim 1, characterised in that said vertical shaft (26) carries a support frame (28, 31) from which are suspended said scrapers, this support frame being fixed in the vicinity of the junction between the upper section of the shaft (26) and said lower section (27) which has a larger diameter than the upper section.

5. A machine according to claim 2, characterised in that it comprises an additional hot air distributing conduit (35) in said second level (10) extending radially from said lower section (27) of larger diameter at a certain distance above the scrapers (32, 33), and at least one adjustable additional hot air outlet opening (36) is provided in the wall of said tubular lower section (27) of the shaft (26).

6. A machine according to any one of the preceding claims, characterised in that the second level (10) includes in its upper part (4) of frustoconical shape at least one adjustable ventilating opening (41).

7. A machine according to claim 6, characterised in that said seed supply means (38) are constituted by an opening in which an endless screw is rotatively mounted in a tube connected to a supply hopper.

8. A machine according to claim 6, characterised in that said husk discharging means comprise in combination a conduit (40) opening into said upper part (4) of the second level (10) and connected to a suction fan outside the machine, and an adjustable opening (41) spaced from the mouth of said conduit (40) so as to produce whirling in said second level.

9. A machine according to any one of the preceding claims, characterized in that said first level (8) is divided horizontally by two parallel partition walls (13, 14) defining an upper compartment (18) which is closed in its upper part by the solid horizontal wall (11) and communicates with said lower section (27) of the vertical shaft through the central opening (12) of said wall (11), a lower compartment (17) and a closed intermediate compartment (15) through which extend vertical tubes (20) which extend through said partition walls (13, 14) and interconnect the lower and upper compartments (17, 18).

10. A machine according to claim 9, characterised in that it comprises a blower (25) driven by a motor and adapted to supply exterior air to said lower compartment (17).

11. A machine according to claim 9, characterised in that a burner (8) is adapted to project flames in said intermediate compartment (15) so as to heat said tubes (20), and a burnt gas outlet opening (22) is provided in a position of said compartment (15) opposed to the burner (8).

12. A machine according to claim 1, characterised in that said vertical shaft (26, 27) carrying the scrapers (32, 33) is driven in rotation by a unit (7) including a motor and a speed reducer, for example mounted in the upper part of the machine.

FIG.3

FIG.1

# FIG.2

## FIG.4